# EUROPÄISCHE PATENTSCHRIFT

(11) **EP 3 330 676 B1**
(45) Veröffentlichungstag und Bekanntmachung des Hinweises auf die Patenterteilung: **18.05.2022**
(21) Anmeldenummer: 17193168.6
(22) Anmeldetag: 26.09.2017
(51) Int. Cl.: G01D 5/14, G01D 5/34, G01D 5/347

(54) **POSITIONSMESSEINRICHTUNG UND VERFAHREN ZUM BETREIBEN EINER POSITIONSMESSEINRICHTUNG**
POSITION MEASURING DEVICE AND METHOD FOR OPERATING SAME
DISPOSITIF DE MESURE DE POSITION ET SON PROCÉDÉ DE FONCTIONNEMENT

(30) Priorität: 02.12.2016 DE 102016224012
(43) Veröffentlichungstag der Anmeldung: 06.06.2018
(73) Patentinhaber: Dr. Johannes Heidenhain GmbH, 83301 Traunreut (DE)
(72) Erfinder: STRASSER, Erich, 83308 Trostberg (DE)

(56) Entgegenhaltungen:
- EP-A2- 1 126 248
- EP-A2- 1 477 699
- EP-A2- 2 662 666
- WO-A1-99/00645
- DE-A1-102014 011 265
- DE-A1-102014 113 374
- KR-A- 20160 023 547

## Beschreibung

### BEZEICHNUNG DER ERFINDUNG

### Positionsmesseinrichtung und Verfahren zum Betreiben einer Positionsmesseinrichtung

### GEBIET DER TECHNIK

Die vorliegende Erfindung betrifft eine Positionsmesseinrichtung nach Anspruch 1, sowie ein Verfahren zum Betreiben einer derartigen Positionsmesseinrichtung nach Anspruch 6 Außerdem betrifft die Erfindung ein Bremssystem für einen Elektromotor nach Anspruch 11.

### STAND DER TECHNIK

Positionsmesseinrichtungen werden insbesondere in der Automatisierungstechnik sehr häufig benötigt, um lineare und rotatorische Bewegungen zu überwachen. Zur Überwachung linearer Bewegungen kommen sogenannte Längenmessgeräte zum Einsatz, wohingegen zur Messung rotatorischer Bewegungen sogenannte Drehgeber oder Winkelmessgeräte eingesetzt werden.

Rotatorische Bewegungen werden meist durch Elektromotoren erzeugt, die eine Motorwelle antreiben, die, ggf. über Kupplungen und Getriebe, Maschinenteile technischer Anlagen bewegt. Um präzise Positionierungsvorgänge vornehmen zu können, werden Elektromotoren in Regelkreisen betrieben, man spricht hier auch von Servoantrieben. Zur kontinuierlichen Messung von Positionsistwerten, die für die Regelung benötigt werden, werden die Winkelstellung und/oder die Umdrehungszahl der Welle von einer Positionsmesseinrichtung (Drehgeber oder Winkelmessgerät) überwacht.

Die EP 1 126 248 A2 beschreibt eine hierfür geeignete Positionsmesseinrichtung. Sie umfasst eine Messteilung auf einem Teilungsträger, der drehfest mit der Welle verbindbar ist, so dass sich die Messteilung in einer Messteilungsebene senkrecht zur Drehachse der Welle dreht. Zur Abtastung der Messteilung steht ihr im Betrieb eine Abtasteinheit gegenüber, die in einer Abtastebene parallel zur Messteilungsebene angeordnet ist. Der Abstand der Ebenen wird als Abtastabstand definiert. Er wird bei der Montage der Positionsmesseinrichtung möglichst präzise eingestellt, um einen optimalen Betriebszustand zu erreichen.

Die EP 2 662 666 A2 beschreibt eine Positionsmesseinrichtung zur Messung von Winkelpositionen einer Maßverkörperung, bei der durch Auswertung von Abtastsignalen, die durch Abtastung der Maßverkörperung mittels einer Abtasteinheit erzeugt werden, eine Exzentrizität und/oder eine Taumelbewegung der Maßverkörperung bezogen auf die Abtasteinheit ermittelt wird.

Neben Drehbewegungen der Welle sind häufig auch lineare Bewegungen von Maschinenteilen zu messen, die sich in Achsrichtung der Motorwelle bewegen. Dies ist beispielsweise bei Bremsvorrichtungen der Fall. Diese dienen dazu, einen Elektromotor in einem Störfall schnell abbremsen und zum Stillstand bringen zu können. Dabei wird ein in Achsrichtung der Welle beweglich gelagertes Maschinenteil mit einer Kraft auf eine Bremsscheibe gedrückt, die drehfest mit der Welle verbunden ist. Durch den Kontakt wird Reibung erzeugt, die eine Bremswirkung hervorruft. In dem Bereich, in dem Reibung stattfindet, ist zur Optimierung des Bremsvorgangs ein Bremsbelag angeordnet. Da dieser durch das Bremsen mit der Zeit abgeschliffen wird, ist es gewünscht, die Dicke des Bremsbelags zu überwachen, um ihn im Zuge einer Wartung frühzeitig austauschen zu können. Auf die Dicke des Bremsbelags kann beispielsweise durch eine Messung des Weges, den das beweglich gelagerte Maschinenteil zum Aktivieren der Bremse zurücklegen muss, geschlossen werden. Hierfür kann eine Längenmesseinrichtung eingesetzt werden. Dies ist aber mit großem konstruktivem Aufwand verbunden und außerdem kostspielig.

### ZUSAMMENFASSUNG DER ERFINDUNG

Es ist eine Aufgabe der vorliegenden Erfindung, eine Vorrichtung anzugeben, mit der die Position eines Maschinenteils in Achsrichtung einer Motorwelle mit geringem Zusatzaufwand messbar ist.

Diese Aufgabe wird gelöst durch eine Positionsmesseinrichtung nach Anspruch 1.

Weiter ist es eine Aufgabe der vorliegenden Erfindung, ein Verfahren anzugeben, mit der die Position eines Maschinenteils in Achsrichtung einer Motorwelle mit geringem Zusatzaufwand messbar ist.

Diese Aufgabe wird gelöst durch ein Verfahren nach Anspruch 6.

Besonders vorteilhaft ist die Verwendung einer erfindungsgemäßen Positionsmesseinrichtung und die Ausführung des korrespondierenden Verfahrens in Verbindung mit einer Motorbremse nach Anspruch 11. Vorteilhafte Ausgestaltungen der vorliegenden Erfindung ergeben sich aus den von den Ansprüchen 1 und 6 abhängigen Ansprüchen, sowie aus der nachfolgenden Beschreibung der Ausführungsbeispiele.

### KURZE BESCHREIBUNG DER ZEICHNUNGEN

Es zeigt
- Figur 1: ein Blockdiagramm einer erfindungsgemäßen Positionsmesseinrichtung,
- Figur 2: eine vereinfachte Schnittdarstellung eines Motorbremssystems und
- Figur 3: ein Blockdiagramm eines Beispiels einer Positionsmesseinrichtung.

### BESCHREIBUNG DER AUSFÜHRUNGSFORMEN

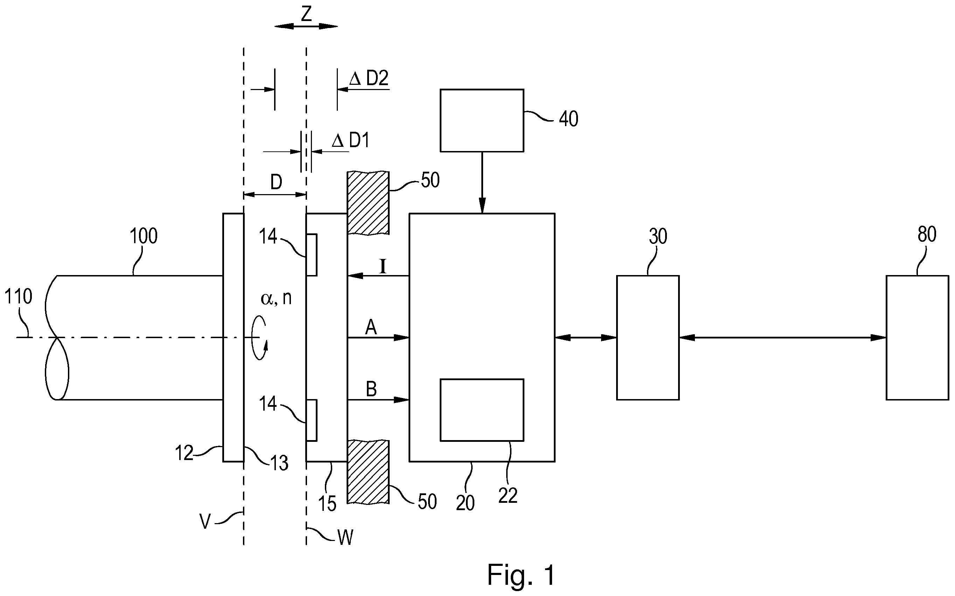

Figur 1 zeigt ein Ausführungsbeispiel einer erfindungsgemäßen Positionsmesseinrichtung. Sie umfasst einen Teilungsträger 12 mit einer Messteilung 13, eine Abtasteinheit 15 mit Abtastelementen 14, eine Auswerteelektronik 20, sowie eine Schnittstelleneinheit 30.

Der Teilungsträger 12 ist scheibenförmig und die Messteilung 13 ist radial um einen Drehpunkt der Scheibe angeordnet. Er ist mit einer Welle 100 verbindbar, so dass die Messteilung 13 in einer Messteilungsebene V senkrecht zu einer Drehachse 110 der Welle 100 rotiert. Die Abtasteinheit 15 ist gegenüber dem Teilungsträger 12 angeordnet, so dass sich die Abtastelemente 14 in einer Abtastebene W befinden, die parallel zur Messteilungsebene V liegt. Aus der Abtastung der Messteilung 13 mit den Abtastelementen 14 resultieren Abtastsignale A, B, die der Auswerteelektronik 20 zugeführt sind. Wenigstens zwei Abtastsignale A, B weisen eine Phasenverschiebung auf, die die Feststellung der Drehrichtung erlaubt. Die Phasenverschiebung beträgt meist 90°.

In Positionsmesseinrichtungen kommen verschiedene physikalische Abtastprinzipien zum Einsatz, beispielsweise optische, magnetische, kapazitive oder induktive.

Unabhängig von Abtastprinzip sind die Abtastsignale A, B sind zum einen positionsabhängig, d.h. sie variieren bei sich drehender Welle 100 in Abhängigkeit von deren Winkelposition a, zum anderen sind sie aber auch abhängig vom Abtastabstand D, also dem Abstand zwischen der Messteilung 13 und den Abtastelementen 14. Im Beispiel entspricht das dem Abstand zwischen der Messteilungsebene V und der Abtastebene W.

Die Auswerteelektronik 20 ermittelt aus den Abtastsignalen A, B in bekannter Weise die Winkelposition α und ggf. die Umdrehungszahl n des Teilungsträgers 12 und damit der Welle 100. Weiter ermittelt die Auswerteelektronik 20 aus den Abtastsignalen A, B den Abtastabstand D. Hierfür können die Amplitudenwerte oder die Spitze-Spitze-Werte der Abtastsignale A, B ausgewertet werden, es können aber auch die Momentanwerte der Abtastsignale A, B herangezogen werden. Andere Faktoren, die Einfluss auf die Abtastsignale A, B haben können, wie beispielsweise die Drehzahl der Welle 100, können ggf. bei der Ermittlung des Abtastabstands D mit berücksichtigt werden.

Der Abtastabstand D kann direkt als Positionswert oder auch indirekt, beispielsweise als Spannungswert angegeben sein. Es sind (beispielsweise aus der eingangs erwähnten EP 1 126 248 A2) Positionsmesseinrichtungen bekannt, bei denen ein Erregersignal der Abtasteinheit 15 basierend auf den Abtastsignalen A, B so nachgeregelt wird, dass die Abtastsignale A, B stets die gleiche Signalamplitude aufweisen. In einer derartigen Regelung sind beispielsweise die Stellgröße zum Einstellen des Erregersignals, oder die Führungsgröße, die das Erregersignal bestimmt, ein Maß für den Abtastabstand D. Im dargestellten Beispiel ist die Stellgröße ein Erregerstrom I.

Die Winkelposition a, die Umdrehungszahl n und der Abtastabstand D können der Schnittstelleneinheit 30 zugeführt und von dieser zu einer Folgeelektronik 80 übertragbar sein. Mit Vorteil ist die Schnittstelleneinheit 30 als digitale, serielle Schnittstelle ausgeführt. Häufig ist die Folgeelektronik 80 ein sog. Master, der jede Datenübertragung auslöst, und die Positionsmesseinrichtung ein sog. Slave, der Daten nur überträgt, wenn er einen entsprechenden Befehl über die Schnittstelleneinheit 30 erhält.

Nach dem Stand der Technik ist es immer das Ziel, bei der Montage den Abtastabstand D möglichst präzise einzustellen und den Teilungsträger 12 und die Abtasteinheit 15 so zu montieren, dass eine Bewegung in Richtung der Drehachse der Welle 100 verhindert wird. Auf diese Weise wird eine Änderung der Signalamplituden der Abtastsignale A, B, die aus der Veränderung des Abtastabstandes D herrührt, vermieden und es stehen immer optimale Abtastsignale A, B zur Ermittlung der Winkelposition α und der Umdrehungszahl n zur Verfügung. Kleinste Veränderungen des Abtastabstands D, beispielsweise hervorgerufen durch temperaturbedingte Längenänderungen der Welle 100 oder eine Taumelbewegung des Teilungsträgers, etc. können dennoch auftreten, so dass sich der Abtastabstand D maximal in einem Bereich ΔD1 verändert.

Die erfindungsgemäße Positionsmesseinrichtung ist nun geeignet ausgestaltet, dass die Abtasteinheit 15 gegenüber dem Teilungsträger 12 in Achsrichtung Z der Welle 100 beweglich montierbar ist, beispielsweise auf einem in Achsrichtung Z beweglich gelagerten Maschinenteil 50, das hier nur schematisch dargestellt wurde. Die Montage erfolgt so, dass der Abtastabstand D für einen Normalbetrieb der Positionsmesseinrichtung präzise eingestellt wird, so dass sich der Abtastabstand D lediglich in einem ersten Bereich ΔD1 verändert. Für die Änderungen des Abtastabstands D im ersten Bereich ΔD1 sind beispielsweise thermische Ausdehnungseffekte verantwortlich. In einem Abstandsmessbetrieb ist jetzt jedoch eine Änderung des Abtastabstands D in einem zweiten Bereich ΔD2 zugelassen, der größer als der erste Bereich ΔD1 ist und diesen umfasst. Im zweiten Bereich ΔD2 ist die Winkelposition a, ggf. mit verminderter Genauigkeit, weiterhin ermittelbar. Mit Vorteil ist im Abstandsmessbetrieb eine niedrigere Drehzahl der Welle 100 zugelassen, als im Normalbetrieb. Besonders vorteilhaft ist es, wenn der Abstandsmessbetrieb bei Stillstand der Welle 100 durchgeführt wird.

Bewegt sich nun das Maschinenteil 50, auf dem die Abtasteinheit 15 montiert ist, so kann durch Messung des Abtastabstands D auch die Position des Maschinenteils 50 gemessen werden. In anderen Worten ist der Abtastabstand D ein Maß für die Position des Maschinenteils 50.

Die Messung kann durch die Folgeelektronik 80 über einen entsprechenden Befehl gestartet werden, der über die Schnittstelleneinheit 30 zur Auswerteelektronik 20 übertragen wird. Ebenso kann in der Auswerteelektronik 20 ausgestaltet sein, sprunghafte Änderungen des Abtastabstands D, insbesondere Änderungen, die über den ersten Bereich ΔD1 hinausgehen, erkennt und daraufhin eine Messung des Abtastabstands D initiiert. Dies ist besonders vorteilhaft, wenn das zu überwachende Maschinenteil 50 zwischen wenigstens zwei Positionen hin und her bewegt wird.

Die Messung des Abtastabstands D zur Bestimmung der Position des Maschinenteils 50 erfolgt mit Vorteil bei gleichen Betriebsbedingungen, so dass äußere Einflüsse, die den Abtastabstand D ebenfalls verändern können, wie z.B. thermische Ausdehnungen, das Messergebnis nicht verfälschen. Darüber hinaus kann wenigstens ein Temperatursensor 40 vorgesehen sein, dessen Messwert der Auswerteelektronik 20 zugeführt ist, so dass diese den Temperatureinfluss berücksichtigen kann. Zur Kompensation anderer Einflussgrößen können weitere Sensoren vorgesehen sein.

Der Wert, der als Maß für die Position des Maschinenteils (50) ermittelt wurde, also in diesem Beispiel der Abtastabstand D, kann in einer Speichereinheit 22 gespeichert werden, die in der Auswerteelektronik 20 angeordnet ist. Alternativ kann er aber auch unmittelbar zur Folgeelektronik 80 übertragen werden. Liegt dieser Wert nicht als Längenmaß vor, sondern in einer anderen physikalischen Größe (z.B. Signalamplituden/Momentanwerte der Abtastsignale A, B, oder Erregerstrom I), kann in der Auswerteelektronik 20 eine entsprechende Umrechnung in ein Längenmaß vorgenommen werden. Der Umrechnung kann eine Umrechnungstabelle zugrunde liegen, die ebenfalls in der Speichereinheit 22 gespeichert sein kann.

In der Speichereinheit 22 kann ein Grenzwert für einen maximalen und/oder minimalen Abtastabstand D gespeichert sein. Durch Vergleich des aktuell gemessenen Abtastabstands D mit gespeicherten Grenzwerten können Fehlerzustände erkannt und ggf. eine entsprechende Statusmeldung an die Folgeelektronik 80 übertragen werden.

Zur Ermittlung des Wertes, der ein Maß für die Position des Maschinenteils 50 ist, kann die Messteilung 13 eine separate Teilungsspur umfassen, für deren Abtastung in der Abtasteinheit 15 separate Abtastelemente 14 vorgesehen sind. In diesem Fall können die Abtastsignale, die zur Ermittlung dieses Wertes herangezogen werden, verschieden sein von den Abtastsignalen, die zur Verarbeitung in digitale Winkelwerte α verwendet werden.

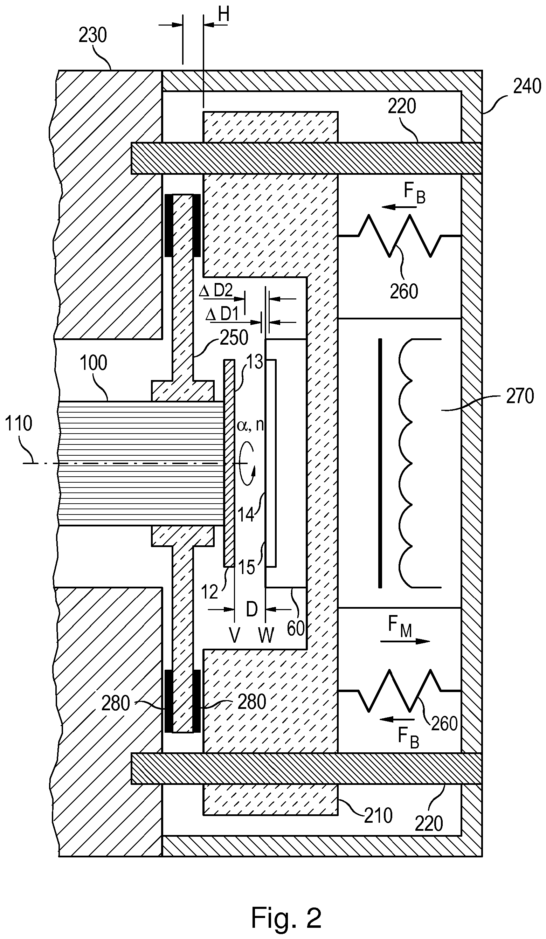

Figur 2 zeigt ein Funktionsschema eines Bremssystems für einen Elektromotor, das an dem der Antriebsseite des Motors abgewandten Ende der Welle 100 angeordnet ist. Zur Überwachung der Funktion der Bremse, insbesondere des Verschleißzustands von Bremsbelägen kommt eine Positionsmesseinrichtung mit unter Figur 1 beschriebenen Eigenschaften zum Einsatz. In Figur 2 ist die Bremse im gelösten Zustand dargestellt.

Das Funktionsprinzip, das einer Motorbremse zugrunde liegt, ist es, zum Aktivieren der Bremse mit einer ersten Kraft, die in Achsrichtung der Welle wirkt, auf ein bezogen auf die Drehung der Welle feststehendes, aber in Achsrichtung durch Führungsmittel beweglich gelagertes Maschinenteil einzuwirken und eine Fläche des Maschinenteils dadurch auf eine Fläche einer mit der Welle rotierenden Bremsscheibe zu drücken. Hierdurch wird Reibung erzeugt, die die Bremswirkung hervorruft. Um die Bremswirkung zu optimieren und eine gleichmäßige Bremsung zu gewährleisten und außerdem den Verschleiß, der durch die Reibung hervorgerufen wird, kontrollierbar zu machen, ist zwischen den Bremsflächen (den Flächen, zwischen denen die aus dem Bremsvorgang resultierende Reibung auftritt), ein Bremsbelag angeordnet. Zum Lösen der Bremse wirkt eine zweite Kraft wiederum in Achsrichtung der Welle auf das Maschinenteil ein und bewegt es von der Bremsscheibe fort, so dass keine Reibung mehr auftritt. Die erste und die zweite Kraft wirken in entgegengesetzten Richtungen. Sie können von beliebigen Krafterzeugungsmitteln erzeugt werden, beispielsweise Federn, Elektromagneten, Massen,... etc.

Zur Realisierung dieses Funktionsprinzips wurde im Ausführungsbeispiel von Figur 2 als beweglich gelagertes Maschinenteil eine Ankerplatte 210 vorgesehen, als Führungsmittel dienen wenigstens zwei Führungsstifte 220. Die Ankerplatte 210 ist mit den Führungsstiften 220 in Achsrichtung der Welle 100 beweglich gelagert. Die Führungsstifte 220 sind einerseits mit einem Gehäuseblock 230 des Motors und andererseits mit einem Montagerahmen 240 verbunden und verhindern gleichzeitig ein Verdrehen der Ankerplatte 210 in Drehrichtung der Welle 100.

Eine Bremsscheibe 250 ist drehfest mit der Welle 100 verbunden und dreht sich mit dieser mit. Als Krafterzeugungsmittel zur Erzeugung der ersten Kraft FB ist wenigstens eine Druckfeder 260 vorgesehen, die die Ankerplatte 210 in Richtung der Bremsscheibe 250 drückt, die zweite Kraft FM erzeugt ein Elektromagnet 270, der im eingeschalteten Zustand die Ankerplatte 210 von der Bremsscheibe 250 wegzieht und so die Bremse löst.

Bei aktivierter Bremse bewirkt die erste Kraft FB, dass sich die Bremsscheibe 250 in Richtung einer Bremsfläche, die am Gehäuseblock 230 des Motors angeordnet ist, elastisch verformt und an diese gedrückt wird, so dass an beiden Seiten der Bremsscheibe 250 Reibung und damit eine Bremswirkung generiert wird.

Auf der Bremsscheibe 250 sind an den Flächen, an denen Reibung erzeugt wird, Bremsbeläge 280 angeordnet.

Zwischen gelöster Bremse (Elektromagnet 270 eingeschaltet) und aktivierter Bremse (Elektromagnet 270 ausgeschaltet) legt die Ankerplatte 210 in Achsrichtung der Welle 100 einen Bremsenhub H zurück. Eine wichtige Einflussgröße für den Bremsenhub H ist die Dicke der Bremsbeläge 280, da sich diese durch Verschleiß (Abrieb) mit der Zeit verringert und sich der Bremsenhub H dadurch verlängert. Dies bedeutet aber auch, dass durch die Messung des Bremsenhubes H Rückschlüsse auf den Verschleißzustand der Bremsbeläge 280 gezogen werden können.

Das Bremssystem umfasst weiter eine Positionsmesseinrichtung, beispielsweise wie sie in Verbindung mit Figur 1 beschrieben wurde. Der Teilungsträger 12 der Positionsmesseinrichtung ist am Wellenende drehfest mit der Welle 100 verbunden und dreht sich somit, wie auch die Bremsscheibe 250, mit der Welle 100 mit.

Wenigstens die Abtasteinheit 15, mit Vorteil aber auch die Auswerteelektronik 20, sowie die Schnittstelleneinheit 30 sind in einem Gehäuse 60 angeordnet, das auf der Ankerplatte 210 (entsprechend dem Maschinenteil 50 von Figur 1) montiert ist, so dass sich Messteilung 13 und Abtastelemente 14 gegenüberstehen. Damit sind mit der Positionsmesseinrichtung, wie bekannt, Winkelposition α und Anzahl n der zurückgelegten Umdrehungen der Welle 100 messbar.

Wie in Figur 1 bereits dargestellt, befindet sich in dieser Anordnung die Messteilung 13 in einer Messteilungsebene V und die Abtasteinheit 15, insbesondere die Abtastelemente 14, parallel dazu in einer Abtastebene W.

Bei dieser Anordnung entspricht die Änderung des Abtastabstands D der Positionsmesseinrichtung bei Aktivieren, bzw. Lösen der Bremse direkt dem Bremsenhub H der Bremse. Da, wie oben beschrieben, der Bremsenhub H von der Dicke der Bremsbeläge abhängig ist, ist der Abtastabstand D bei aktivierter Bremse auch ein Maß für die Dicke der Bremsbeläge 280 und daher geeignet zur Überwachung der Dicke der Bremsbeläge 280.

Zur Überwachung der Dicke der Bremsbeläge 280 wird mit Vorteil in einem Anfangszustand der Bremse (neue Bremsbeläge 280) der Abtastabstand D bei aktivierter Bremse gemessen und als Referenzwert gespeichert. Zum Speichern kann in der Auswerteelektronik 20 eine Speichereinheit 22 vorgesehen sein. Alternativ kann der Referenzwert auch zu einer Folgeelektronik 80 übertragen und dort gespeichert werden.

Die Messung des Abtastabstands D zur Ermittlung der Dicke der Bremsbeläge 280 erfolgt mit Vorteil in Stillstand, also bei stehender Welle 100. Dadurch wird verhindert, dass sonstige Einflussgrößen, die den Abtastabstand D beeinflussen, das Messergebnis verfälschen, bzw. bei der Messung berücksichtigt werden müssen.

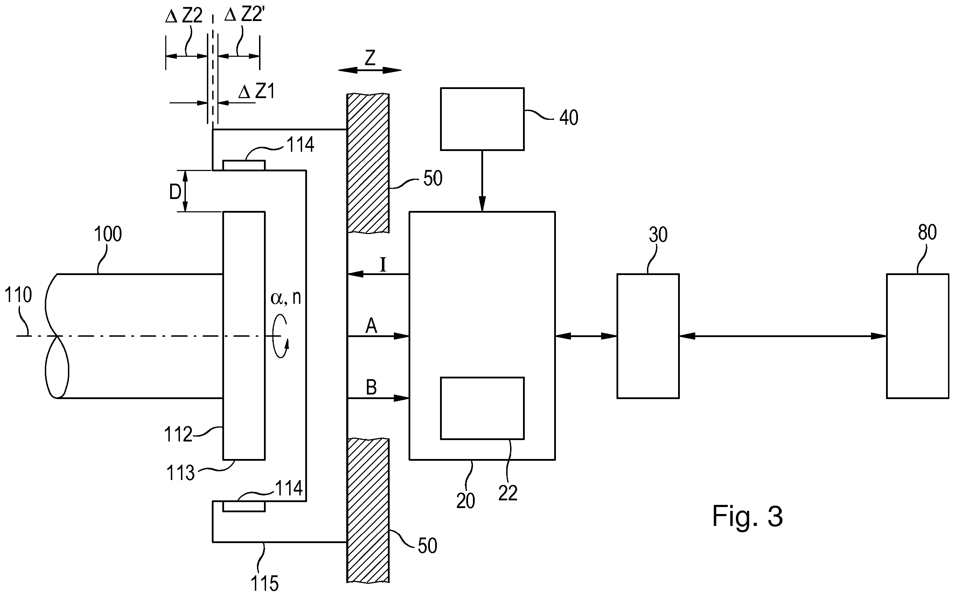

Figur 3 zeigt ein Beispiel einer Positionsmesseinrichtung. Komponenten, die in Verbindung mit der Positionsmesseinrichtung in Figur 1 bereits beschrieben wurden, tragen das gleiche Bezugszeichen.

Abweichend zum vorhergehenden Ausführungsbeispiel ist der Teilungsträger 112 nun zylinderförmig und die Messteilung 113 befindet sich auf der Mantelfläche des Zylinders. Die Abtastelemente 114 der Abtasteinheit 115 in einem Abtastabstand D von der Messteilung 113 beabstandet angeordnet. Dabei können die Abtastelemente 114 nur an einer Stelle, oder auch an mehreren Stellen über den Umfang des Zylinders verteilt angebracht sein. Insbesondere dann, wenn ein induktives Abtastprinzip zum Einsatz kommt, ist es vorteilhaft, die Abtastelemente (Erreger- und Empfängerspulen) so auszuführen, dass sie die Mantelfläche des Zylinders umschließen.

Die Abtasteinheit 115 ist wiederum an einem Maschinenteil 50 montierbar, das in Achsrichtung Z der Welle 100 beweglich gelagert ist. Die Montage erfolgt so, dass die Amplituden der Abtastsignale A, B in einem Normalbetrieb bezogen auf den Verfahrweg des Maschinenteils 50 in Achsrichtung Z ein Maximum erreichen. Übersteigt die Breite der Messteilung 113 (im Idealfall gleich der Höhe des zylinderförmigen Teilungsträgers) die Breite der aktiven Bereiche der Abtastelemente 114, so ergibt sich ein kleiner Bereich ΔZ1, in dem eine Bewegung des Maschinenteils 50 in Achsrichtung Z keinen Einfluss auf die Amplitude der Abtastsignale A, B hat. Bewegt sich das Maschinenteil 50 jedoch in einem Abstandsmessbetrieb in Bereichen ΔZ2, bzw. ΔZ2', die sich dem Bereich ΔZ1 je nach Bewegungsrichtung anschließen, so verringert sich die Amplitude der Abtastsignale A, B und ist so wiederum ein Maß für die Position des Maschinenteils in Achsrichtung Z.

Analog zum vorherigen Ausführungsbeispiel wird der Abstandsmessbetrieb mit Vorteil bei niedrigen Drehzahlen, insbesondere bei Stillstand der Welle 100 durchgeführt.

Auch in diesem Beispiel kann vorgesehen sein, ein Erregersignal der Abtasteinheit 115 basierend auf den Abtastsignalen A, B so nachzuregeln, dass die Abtastsignale A, B stets die gleiche Signalamplitude aufweisen. So können auch hier Parameter der Regelung, wie beispielsweise die Stellgröße zum Einstellen des Erregersignals, oder die Führungsgröße zum Einstellen der Stellgröße, ein Maß für die Position des Maschinenteils 50 sein. Im dargestellten Beispiel ist Stellgröße der Erregerstrom I.

Der Teilungsträger 112 mit der Messteilung 113 und die Abtasteinheit 115 mit den Abtastelementen 114 können somit den Teilungsträger 12 mit der Messteilung 13 und die Abtasteinheit 15 mit den Abtastelementen 14 in Figur 2 ersetzen.

Die vorliegende Erfindung ist nicht auf die beschriebenen Ausführungsbeispiele eingeschränkt, sondern kann von einem Fachmann innerhalb des Schutzumfangs der Ansprüche alternativ ausgeführt werden.

## Patentansprüche

1. Positionsmesseinrichtung, umfassend
• einen Teilungsträger (12, 112) mit einer Messteilung (13, 113), der drehfest mit einer Welle (100) verbunden ist,
• eine Abtasteinheit (15, 115) mit Abtastelementen (14, 114), zur Erzeugung von Abtastsignalen (A, B) durch Abtastung der Messteilung (13, 113),
• einer Auswerteelektronik (20) die dazu eingerichtet ist, Abtastsignale (A, B) in einen digitalen Winkelwert (a) der Welle zu verarbeiten,
• eine Schnittstelleneinheit (30) zur Kommunikation mit einer Folgeelektronik (80),
wobei die Abtasteinheit (15, 115) auf einem in einer Achsrichtung (Z) der Welle (100) beweglich gelagerten Maschinenteil (50, 210) montiert ist, so dass die Abtastsignale (A, B) von der Position des Maschinenteils (50, 210) in Achsrichtung (Z) der Welle (100) abhängig sind und
wobei die Auswerteelektronik (20) dazu eingerichtet ist, aus den Abtastsignalen (A, B) ein Maß für diese Position des Maschinenteils (50, 210) zu ermitteln und
• wobei der Teilungsträger (12) scheibenförmig ist und die Messteilung (13) radial um die Drehachse (110) der Welle (100) in einer Messteilungsebene (V) angeordnet ist, die senkrecht zur Drehachse (110) der Welle (100) angeordnet ist,
• wobei die Auswerteelektronik (20) dazu eingerichtet ist, einen Abtastabstand (D) zwischen der Messteilung (13) und der Abtasteinheit (15) zu ermitteln, wobei der Abtastabstand (D) ein Maß für die Position des Maschinenteils (50, 210) in Achsrichtung (Z) der Welle (100) ist,
• wobei die Positionsmesseinrichtung dazu eingerichtet ist, in einem Normalbetrieb oder in einem Abstandsmessbetrieb betrieben zu werden,
• wobei im Normalbetrieb der Abtastabstand (D) in einem ersten Bereich (ΔD1) veränderbar ist und
• im Abstandsmessbetrieb zur Messung der Position des Maschinenteils (50, 210) der Abtastabstand (D) in einem zweiten Bereich (ΔD2) veränderbar ist, der größer ist als der erste Bereich (ΔD1) und diesen mit einschließt.

2. Positionsmesseinrichtung nach Anspruch 1, wobei in der Auswerteelektronik (20) eine Speichereinheit (20) angeordnet ist, in der das ermittelte Maß für die Position des Maschinenteils (50, 210) speicherbar ist.

3. Positionsmesseinrichtung nach einem der vorhergehenden Ansprüche, wobei die Messung der Position des Maschinenteils (50, 210) von der Folgeelektronik (80) über einen Befehl initiierbar ist, der über die Schnittstelleneinheit (30) zur Auswerteelektronik (20) übertragbar ist.

4. Positionsmesseinrichtung nach einem der vorhergehenden Ansprüche, wobei die Auswerteelektronik (20) ausgestaltet ist, sprunghafte Änderungen der Position des Maschinenteils (50, 210), zu erkennen und daraufhin eine Messung zu initiieren.

5. Positionsmesseinrichtung nach einem der vorhergehenden Ansprüche, wobei das Maschinenteil (50) eine Ankerplatte (210) einer Motorbremse ist.

6. Verfahren zum Betreiben einer Positionsmesseinrichtung, umfassend
• einen Teilungsträger (12, 112) mit einer Messteilung (13, 113), der drehfest mit einer Welle (100) verbunden ist,
• eine Abtasteinheit (15, 115) mit Abtastelementen (14, 114), zur Erzeugung von Abtastsignalen (A, B) durch Abtastung der Messteilung (13, 113),
• einer Auswerteelektronik (20) die dazu eingerichtet ist, Abtastsignale (A, B) in einen digitalen Winkelwert (a) der Welle zu verarbeiten,
• eine Schnittstelleneinheit (30) zur Kommunikation mit einer Folgeelektronik (80),
wobei die Abtasteinheit (15, 115) auf einem in einer Achsrichtung (Z) der Welle (100) beweglich gelagerten Maschinenteil (50, 210) montiert ist, so dass die Abtastsignale (A, B) von der Position des Maschinenteils (50, 210) in Achsrichtung (Z) der Welle (100) abhängig sind und
wobei in der Auswerteelektronik (20) aus den Abtastsignalen (A, B) ein Maß für diese Position des Maschinenteils (50, 210) ermittelt wird **und**
• wobei der Teilungsträger (12) scheibenförmig ist und die Messteilung (13) radial um die Drehachse (110) der Welle (100) in einer Messteilungsebene (V) angeordnet ist, die senkrecht zur Drehachse (110) der Welle (100) angeordnet ist,
• wobei in der Auswerteelektronik (20) ein Abtastabstand (D) zwischen der Messteilung (13) und der Abtasteinheit (15) ermittelt wird, wobei der Abtastabstand (D) ein Maß für die Position des Maschinenteils (50, 210) in Achsrichtung (Z) der Welle (100) ist,
• wobei die Positionsmesseinrichtung dazu eingerichtet ist, in einem Normalbetrieb oder in einem Abstandsmessbetrieb betrieben zu werden,
• wobei im Normalbetrieb der Abtastabstand (D) in einem ersten Bereich (ΔD1) veränderbar ist und
• im Abstandsmessbetrieb zur Messung der Position des Maschinenteils (50, 210) der Abtastabstand (D) in einem zweiten Bereich (ΔD2) veränderbar ist, der größer ist als der erste Bereich (ΔD1) und diesen mit einschließt.

7. Verfahren nach Anspruch 6, wobei in der Auswerteelektronik (20) eine Speichereinheit (20) angeordnet ist, in der die Position des Maschinenteils (50, 210) gespeichert wird.

8. Verfahren nach einem der Ansprüche 6 oder 8, wobei die Messung der Position des Maschinenteils (50, 210) von der Folgeelektronik (80) über einen Befehl initiiert wird, der über die Schnittstelleneinheit (30) zur Auswerteelektronik (20) übertragen wird.

9. Verfahren nach einem der Ansprüche 6 bis 8, wobei von der Auswerteelektronik (20) sprunghafte Änderungen der Position des Maschinenteils (50, 210) erkannt werden und daraufhin eine Messung der Position des Maschinenteils (50, 210) initiiert wird.

10. Verfahren nach einem der Ansprüche 6 bis 9, wobei der Abstandsmessbetrieb bei niedriger Umdrehungsgeschwindigkeit der Welle (100), insbesondere bei Stillstand der Welle (100), durchgeführt wird.

11. Bremssystem für einen Elektromotor mit einer Bremse, umfassend
• eine Bremsscheibe (250), die drehfest mit der Welle (100) des Elektromotors verbunden ist,
• eine Ankerplatte (210), die in Achsrichtung der Welle (100) beweglich gelagert ist,
• Krafterzeugungsmittel zur Erzeugung einer ersten Kraft, mit der zur Aktivierung der Bremse die Ankerplatte (210) in Achsrichtung bewegbar und eine Fläche der Ankerplatte (210) zur Erzeugung von Reibung auf eine Fläche der Bremsscheibe (250) drückbar ist,
• Krafterzeugungsmittel zur Erzeugung einer zweiten Kraft, mit der zum Lösen der Bremse die Ankerplatte (210) von der Bremsscheibe (250) wegbewegbar ist,
• wenigstens einem Bremsbelag (280), der zwischen den Flächen, an denen Reibung erzeugt wird, angeordnet ist,
**dadurch gekennzeichnet, dass**
• das Bremssystem weiter eine Positionsmesseinrichtung (10) nach einem der Ansprüche 1 bis 5 umfasst,
• an der Welle (100) ein Teilungsträger (12) mit einer Messteilung (13) der Positionsmesseinrichtung (10) angeordnet ist,
• auf der Ankerplatte (210) eine Abtasteinheit (15) mit Abtastelementen (14) der Positionsmesseinrichtung (10) angeordnet ist und
• die Positionsmesseinrichtung geeignet ist zum Ausführen eines Verfahrens nach einem der Ansprüche 6 bis 10.

## Claims

1. Position measuring device comprising
• a graduation carrier (12, 112) which has a measurement graduation (13, 113) and is connected to a shaft (100) in a rotationally fixed manner,
• a scanning unit (15, 115) having scanning elements (14, 114) for generating scanning signals (A, B) by scanning the measurement graduation (13, 113),
• evaluation electronics (20) which are configured to process scanning signals (A, B) to form a digital angle value (α) of the shaft,
• an interface unit (30) for communicating with downstream electronics (80),
wherein the scanning unit (15, 115) is mounted on a machine part (50, 210) which is movably mounted in an axial direction (Z) of the shaft (100), such that the scanning signals (A, B) are dependent on the position of the machine part (50, 210) in the axial direction (Z) of the shaft (100), and
wherein the evaluation electronics (20) are configured to determine a measure of this position of the machine part (50, 210) from the scanning signals (A, B), and
• wherein the graduation carrier (12) is disc-shaped and the measurement graduation (13) is arranged radially around the axis of rotation (110) of the shaft (100) in a measurement graduation plane (V) which is arranged perpendicular to the axis of rotation (110) of the shaft (100),
• wherein the evaluation electronics (20) are configured to determine a scanning distance (D) between the measurement graduation (13) and the scanning unit (15), wherein the scanning distance (D) is a measure of the position of the machine part (50, 210) in the axial direction (Z) of the shaft (100),
• wherein the position measuring device is configured to be operated in a normal mode or in a distance measuring mode,
• wherein the scanning distance (D) can be changed in a first range (ΔD1) in the normal mode, and
• the scanning distance (D) can be changed in a second range (ΔD2), which is greater than the first range (ΔD1) and includes the latter, in the distance measuring mode for measuring the position of the machine part (50, 210) .

2. Position measuring device according to Claim 1, wherein a storage unit (20) is arranged in the evaluation electronics (20) and can store the determined measure of the position of the machine part (50, 210).

3. Position measuring device according to one of the preceding claims, wherein the measurement of the position of the machine part (50, 210) can be initiated by the downstream electronics (80) using a command which can be transmitted to the evaluation electronics (20) via the interface unit (30).

4. Position measuring device according to one of the preceding claims, wherein the evaluation electronics (20) are configured to detect sudden changes in the position of the machine part (50, 210) and to then initiate a measurement.

5. Position measuring device according to one of the preceding claims, wherein the machine part (50) is an anchor plate (210) of a motor brake.

6. Method for operating a position measuring device comprising
• a graduation carrier (12, 112) which has a measurement graduation (13, 113) and is connected to a shaft (100) in a rotationally fixed manner,
• a scanning unit (15, 115) having scanning elements (14, 114) for generating scanning signals (A, B) by scanning the measurement graduation (13, 113),
• evaluation electronics (20) which are configured to process scanning signals (A, B) to form a digital angle value (α) of the shaft,
• an interface unit (30) for communicating with downstream electronics (80),
wherein the scanning unit (15, 115) is mounted on a machine part (50, 210) which is movably mounted in an axial direction (Z) of the shaft (100), such that the scanning signals (A, B) are dependent on the position of the machine part (50, 210) in the axial direction (Z) of the shaft (100), and
wherein a measure of this position of the machine part (50, 210) is determined from the scanning signals (A, B) in the evaluation electronics (20), and
• wherein the graduation carrier (12) is disc-shaped and the measurement graduation (13) is arranged radially around the axis of rotation (110) of the shaft (100) in a measurement graduation plane (V) which is arranged perpendicular to the axis of rotation (110) of the shaft (100),
• wherein a scanning distance (D) between the measurement graduation (13) and the scanning unit (15) is determined in the evaluation electronics (20), wherein the scanning distance (D) is a measure of the position of the machine part (50, 210) in the axial direction (Z) of the shaft (100),
• wherein the position measuring device is configured to be operated in a normal mode or in a distance measuring mode,
• wherein the scanning distance (D) can be changed in a first range (ΔD1) in the normal mode, and
• the scanning distance (D) can be changed in a second range (ΔD2), which is greater than the first range (ΔD1) and includes the latter, in the distance measuring mode for measuring the position of the machine part (50, 210) .

7. Method according to Claim 6, wherein a storage unit (20) is arranged in the evaluation electronics (20) and stores the position of the machine part (50, 210).

8. Method according to either of Claims 6 and 8, wherein the measurement of the position of the machine part (50, 210) is initiated by the downstream electronics (80) using a command which is transmitted to the evaluation electronics (20) via the interface unit (30).

9. Method according to one of Claims 6 to 8, wherein the evaluation electronics (20) detect sudden changes in the position of the machine part (50, 210) and a measurement of the position of the machine part (50, 210) is then initiated.

10. Method according to one of Claims 6 to 9, wherein the distance measuring mode is carried out at a low rotational speed of the shaft (100), in particular when the shaft (100) is at a standstill.

11. Brake system for an electric motor having a brake, comprising
• a brake disc (250) which is connected to the shaft (100) of the electric motor in a rotationally fixed manner,
• an anchor plate (210) which is movably mounted in the axial direction of the shaft (100),
• force generating means for generating a first force which can be used to move the anchor plate (210) in the axial direction in order to activate the brake and can be used to press an area of the anchor plate (210) onto an area of the brake disc (250) in order to produce friction,
• force generating means for generating a second force which can be used to move the anchor plate (210) away from the brake disc (250) in order to release the brake,
• at least one brake lining (280) which is arranged between the areas at which friction is produced, **characterized in that**
• the brake system also comprises a position measuring device (10) according to one of Claims 1 to 5,
• a graduation carrier (12) having a measurement graduation (13) of the position measuring device (10) is arranged on the shaft (100),
• a scanning unit (15) having scanning elements (14) of the position measuring device (10) is arranged on the anchor plate (210), and
• the position measuring device is suitable for carrying out a method according to one of Claims 6 to 10

## Revendications

1. Dispositif de mesure de position, comprenant
* un porte-graduation (12, 112) doté d'une graduation de mesure (13, 113) qui est reliée solidaire en rotation à un arbre (100),
* une unité de palpage (15, 115) dotée d'éléments de palpage (14, 114), destinée à générer des signaux de palpage (A, B) par palpage d'une graduation de mesure (13, 113),
* une électronique d'interprétation (20), qui est conçue pour traiter les signaux de palpage (A, B) en une valeur angulaire numérique (a) de l'arbre,
* une unité d'interface (30) destinée à la communication avec une électronique située en aval (80), l'unité de palpage (15, 115) étant montée sur une partie de machine (50, 210) montée mobile dans une direction d'axe (Z) de l'arbre (100), de sorte que les signaux de palpage (A, B) sont dépendants de la position de la partie de machine (50, 210) dans la direction d'axe (Z) de l'arbre (100) et
l'électronique d'interprétation (20) étant conçue pour déterminer une cote pour la position de cette partie de machine (50, 210) à partir des signaux de palpage (A, B) et
* le porte-graduation (12) étant en forme de disque et la graduation de mesure (13) étant disposée radialement autour de l'axe de rotation (110) de l'arbre (100) dans un plan de graduation de mesure (V) qui est disposé perpendiculairement à l'axe de rotation (110) de l'arbre (100),
* l'électronique d'interprétation (20) étant conçue pour déterminer une distance de palpage (D) entre la graduation de mesure (13) et l'unité de palpage (15), la distance de palpage (D) étant une cote pour la position de la partie de machine (50, 210) dans la direction d'axe (Z) de l'arbre (100),
* le dispositif de mesure de position étant conçu pour fonctionner dans un mode normal ou dans un mode de mesure de distance,
* dans le mode normal, la distance de palpage (D) pouvant varier dans une première plage (ΔD1) et
* dans le mode de mesure de distance, en vue de mesurer la position de la partie de machine (50, 210), la distance de palpage (D) pouvant varier dans une deuxième plage (ΔD2), laquelle est plus grande que la première plage (ΔD1) et inclut celle-ci.

2. Dispositif de mesure de position selon la revendication 1, une unité de mémoire (20) étant disposée dans l'électronique d'interprétation (20), dans laquelle peut être mémorisée la cote déterminée pour la position de la partie de machine (50, 210).

3. Dispositif de mesure de position selon l'une des revendications précédentes, la mesure de la position de la partie de machine (50, 210) pouvant être initiée par l'électronique située en aval (80) par le biais d'une instruction, laquelle peut être transmise à l'électronique d'interprétation (20) par le biais de l'unité d'interface (30).

4. Dispositif de mesure de position selon l'une des revendications précédentes, l'électronique d'interprétation (20) étant configurée pour reconnaître des variations soudaines de la position de la partie de machine (50, 210) et, sur celles-ci, initier une mesure.

5. Dispositif de mesure de position selon l'une des revendications précédentes, la partie de machine (50) étant une plaque d'induit (210) d'un frein moteur.

6. Procédé pour faire fonctionner un dispositif de mesure de position, comprenant
* un porte-graduation (12, 112) doté d'une graduation de mesure (13, 113) qui est reliée solidaire en rotation à un arbre (100),
* une unité de palpage (15, 115) dotée d'éléments de palpage (14, 114), destinée à générer des signaux de palpage (A, B) par palpage d'une graduation de mesure (13, 113),
* une électronique d'interprétation (20), qui est conçue pour traiter les signaux de palpage (A, B) en une valeur angulaire numérique (a) de l'arbre,
* une unité d'interface (30) destinée à la communication avec une électronique située en aval (80), l'unité de palpage (15, 115) étant montée sur une partie de machine (50, 210) montée mobile dans une direction d'axe (Z) de l'arbre (100), de sorte que les signaux de palpage (A, B) sont dépendants de la position de la partie de machine (50, 210) dans la direction d'axe (Z) de l'arbre (100) et
une cote pour la position de cette partie de machine (50, 210) étant déterminée dans l'électronique d'interprétation (20) à partir des signaux de palpage (A, B) et
* le porte-graduation (12) étant en forme de disque et la graduation de mesure (13) étant disposée radialement autour de l'axe de rotation (110) de l'arbre (100) dans un plan de graduation de mesure (V) qui est disposé perpendiculairement à l'axe de rotation (110) de l'arbre (100),
* une distance de palpage (D) entre la graduation de mesure (13) et l'unité de palpage (15) étant déterminée dans l'électronique d'interprétation (20), la distance de palpage (D) étant une cote pour la position de la partie de machine (50, 210) dans la direction d'axe (Z) de l'arbre (100),
* le dispositif de mesure de position étant conçu pour fonctionner dans un mode normal ou dans un mode de mesure de distance,
* dans le mode normal, la distance de palpage (D) pouvant varier dans une première plage (ΔD1) et
* dans le mode de mesure de distance, en vue de mesurer la position de la partie de machine (50, 210), la distance de palpage (D) pouvant varier dans une deuxième plage (ΔD2), laquelle est plus grande que la première plage (ΔD1) et inclut celle-ci.

7. Procédé selon la revendication 6, une unité de mémoire (20) étant disposée dans l'électronique d'interprétation (20), dans laquelle est mémorisée la cote déterminée pour la position de la partie de machine (50, 210).

8. Procédé selon l'une des revendications 6 ou 8, la mesure de la position de la partie de machine (50, 210) étant initiée par l'électronique située en aval (80) par le biais d'une instruction, laquelle est transmise à l'électronique d'interprétation (20) par le biais de l'unité d'interface (30).

9. Procédé selon l'une des revendications 6 à 8, des variations soudaines de la position de la partie de machine (50, 210) étant reconnues par l'électronique d'interprétation (20) et, sur celles-ci, une mesure de la position de la partie de machine (50, 210) étant initiée.

10. Procédé selon l'une des revendications 6 à 9, le mode de mesure de distance étant effectué avec une faible vitesse de rotation de l'arbre (100), notamment à l'arrêt de l'arbre (100).

11. Système de frein pour un moteur électrique équipé d'un frein, comprenant
* un disque de frein (250), qui est relié solidaire en rotation à l'arbre (100) du moteur électrique,
* une plaque d'induit (210), qui est montée mobile dans la direction d'axe de l'arbre (100),
* des moyens de génération de force destinés à générer une première force, avec laquelle la plaque d'induit (210) peut être déplacée dans la direction d'axe en vue d'activer le frein et une surface de la plaque d'induit (210) peut être pressée sur une surface du disque de frein (250) en vue de générer un frottement,
* des moyens de génération de force destinés à générer une deuxième force, avec laquelle la plaque d'induit (210) peut être déplacée à l'écart du disque de frein (250) en vue de desserrer le frein,
* au moins une garniture de frein (280), laquelle est disposée entre les surfaces au niveau desquelles est généré le frottement,
**caractérisé en ce que**
* le système de frein comporte en outre un dispositif de mesure de position (10) selon l'une des revendications 1 à 5,
* un porte-graduation (12) doté d'une graduation de mesure (13) du dispositif de mesure de position (10) est disposé sur l'arbre (100),
* une unité de palpage (15) dotée d'éléments de palpage (14) du dispositif de mesure de position (10) est disposée sur la plaque d'induit (210) et
* le dispositif de mesure de position est conçu pour mettre en œuvre un procédé selon l'une des revendications 6 à 10.
